# EUROPÄISCHE PATENTANMELDUNG

(11) **EP 0 911 218 A2**
(43) Veröffentlichungstag der Anmeldung: **28.04.1999**
(21) Anmeldenummer: 98117501.1
(22) Anmeldetag: 15.09.1998
(51) Int. Cl.: B60Q 1/32

(54) **Fahrzeug mit Elektrolumineszenz-Leuchtband**

(30) Priorität: 20.10.1997 DE 19745993
(71) Anmelder: DaimlerChrysler AG, 70567 Stuttgart (DE)
(72) Erfinder: Heinz, Werner, 75233 Tiefenbronn (DE); Müller, Wolfgang, 71063 Sindelfingen (DE)

(57) **Zusammenfassung**

Die Erfindung bezieht sich auf ein Fahrzeug mit wenigstens einem an der Außenhaut einer Fahrzeugkarosserie angeordneten Elektrolumineszenz-Leuchtband.

Erfindungsgemäß ist das Elektrolumineszenz-Leuchtband in einer zugehörigen Vertiefung der Karosserieaußenhaut derart angeordnet, daß es außenseitig im wesentlichen bündig zum angrenzenden Außenhautbereich verläuft, und/oder es erstreckt sich durchgängig von einem frontseitigen Scheinwerfer bis zu einer Heckleuchte und/oder es wird während eines bestimmten Fahrmanövers als Lauflicht dergestalt betrieben, daß dessen Laufrichtung der jeweiligen Fahrtrichtung des Fahrzeugs entspricht.

Verwendung beispielsweise bei Personenkraftwagen.

## Beschreibung

Die Erfindung bezieht sich auf ein Fahrzeug mit wenigstens einem an der Außenhaut der Fahrzeugkarosserie angeordneten Elektrolumineszenz-Leuchtband.

Ein derartiges Fahrzeug ist aus der Patentschrift EP 0 611 040 B1 bekannt. Dort ist das Elektrolumineszenz-Leuchtband in der Art einer Zierleiste ausgebildet und an den Fahrzeugseiten zwischen Vorder- und Hinterradbereich verlaufend angeordnet. Das streifenförmige Leuchtband besteht aus einem elektrolumineszenzaktiven Aufbau, der mit einem kontinuierlichen, feuchtigkeitsundurchlässigen, extrudierten Polymer verkapselt ist. Die Verwendung von Elektrolumineszenz-Leuchten in Fahrzeugen ist darüber hinaus für Ornamente und zur Hintergrundbeleuchtung von Instrumenten bekannt. Des weiteren ist bekannt, daß Elektrolumineszenz-Leuchtflachen in beliebigen Konturen hergestellt und verwendet werden könner, siehe z.B. die Offenlegungsschrift DE 38 02 317 A1 und die Patentschrift US 2 928 015.

Bei einem in der Offenlegungsschrift DE 195 29 884 A1 offenbarten Fahrzeug ist ein elektrisch aktivierbares Leuchtfolienband vorgesehen, das, unterbrochen durch die Radkästen, in einem unteren Außenhautbereich unterhalb der Fahrzeugaußenleuchten umläuft.

Ein in der Offenlegungsschrift DE 44 21 942 A1 offenbartes Fahrzeug weist ein beleuchtbares Feld, insbsondere einen Schriftzug oder dergleichen, an einem Fahrzeugwandteil auf, das mit entsprechenden Öffnungen für den Schriftzug oder dergleichen versehen ist. An einer verdeckten Seite des Wandteils ist eine Leuchtfolie angebracht, wobei zwischen Wandteil und Leuchtfolie ein glasartiges Zwischenteil vorgesehen sein kann, das in die Öffnungen hineinragende Erhebungen aufweist, die oberflächenbündig mit einer sichtbaren Seite des Wandteils ausgeführt sind. Insbesondere bei Positionierung der Leuchtfolie an einem Einstiegschweller kann vorgesehen sein, die Leuchtfolie mittels eines Türkontaktschalters selbsttätig mit dem Öffnen und Schließen der Fahrzeugtür ein- und auszuschalten.

Des weiteren wurde bereits vorgeschlagen, elektrisch aktivierbare Leuchtfolien in Bremslichtfunktion an Fahrzeugen einzusetzen und sie hierfür vorzugsweise heckseitig am Fahrzeug zu positionieren, siehe die Gebrauchsmuster DE 296 16 583 U1, DE 297 06 600 U1 und DE 297 08 393 U1.

Aus der Gebrauchsmusterschrift DE 1 679 089 ist es bekannt, ein Lauflicht in Blinkerfunktion an einem Fahrzeug einzusetzen, um das Abbiegen nach links oder rechts anzuzeigen.

Der Erfindung liegt als technisches Problem die Bereitstellung eines Fahrzeugs der eingangs genannten Art zugrunde, bei dem das Elektrolumineszenz-Leuchtband optisch und funktionell vorteilhaft angebracht ist und/oder in einer bestimmte Fahrzeugzustände vorteilhaft anzeigenden Weise ansteuerbar ist.

Die Erfindung löst dieses Problem durch die Bereitstellung eines Fahrzeugs mit den Merkmalen des Anspruchs 1, 2 oder 3.

Beim Fahrzeug nach Anspruch 1 erstreckt sich das Elektrolumineszenz-Leuchtband in charakteristischer Weise durchgängig von einem frontseitiger Scheinwerfer bis zu einer Heckleuchte. Damit wird der Scheinwerfer vorteilhaft mit der Heckleuchte zu einer optischen Gesamteinheit verbunden, und die Form des Leuchtbandes unterstreicht besonders bei Dunkelheit die Kontur des Fahrzeugs und dessen repräsentativen Charakter. Zudem erstreckt sich das Leuchtband auch in den nicht durchstrahlten Bereich einer Streuscheibe des Scheinwerfers und/oder der Heckleuchte hinein, was die optische Verbindung von Scheinwerfer und Heckleuchte weiter fördert.

Beim Fahrzeug nach Anspruch 2 nimmt das Elektrolumineszenz-Leuchtband seinen Einschalt- oder Ausschalt-Zustand in Abhängigkeit vom Zustand eines Fahrzeugaußenlichtes und/oder einer Zentralverriegelungsanlage und/oder einer Diebstahlwarnanlage ein. Auf diese Weise kann durch entsprechende Aktivierung des Leuchtbandes eine zusätzliche Information über das Schließen des Fahrzeugs bzw. den Bereitschaftszustand einer Einbruch-Diebstahl-Warnanlage vermittelt werden, oder das aktivierte Leuchtband kann auf die Auslösung eines Entriegelungssignals einer Zentralverriegelungs-Fernbedienung reagieren, um das Auffinden des Fahrzeugs, z.B. in einem Parkhaus, zu erleichtern.

Beim Fahrzeug nach Anspruch 3 wird das Elektrolumineszenz-Leuchtband während eines Fahrmanövers, z.B. einem Einpark- oder Ausparkmanöver, in spezieller Weise angesteuert, nämlich so, daß es als Lauflicht betrieben wird, dessen Laufrichtung der jeweiligen Vorwärts- oder Rückwärts-Fahrtrichtung des Fahrzeugs entspricht. Das Leuchtband ist in diesem Fall geeignet aus separat ansteuerbaren Einzelsegmenten aufgebaut.

Beim nach Anspruch 4 weitergebildeten Fahrzeug ist das Elektrolumineszenz-Leuchtband speziell in einer zugehörigen Vertiefung der Karosserieaußenhaut derart angeordnet, daß es außenseitig im wesentlichen bündig zum angrenzenden Karosseriebereich verläuft. Dies ergibt einen glatt verlaufenden und damit optisch vorteilhaften Eindruck der Fahrzeugaußenhaut auch in dem mit dem Leuchtband versehenen Bereich, im Gegensatz zu einfach auf die Karosserieaußenhaut zusätzlich z.B. in Form von Zierleisten aufgebrachten Leuchtbändern.

Eine vorteilhafte Ausführungsform der Erfindung ist in den Zeichnungen dargestellt und wird nachfolgend beschrieben. Dabei zeigen:
- Fig. 1: eine schematische Seitenansicht eines Personenkraftwagens mit karosserieaußenseitig angebrachten Elektrolumineszenz-Leuchtbändern,
- Fig. 2: eine schematische Frontansicht des Personenkraftwagens von Fig. 1,
- Fig. 3: eine schematische Heckansicht des Personenkraftwagens von Fig. 1 und
- Fig. 4: eine Querschnittsansicht aus dem Bereich eines der beim Personenkraftwagen von Fig. 1 vorgesehenen Elektrolumineszenz-Leuchtbänder.

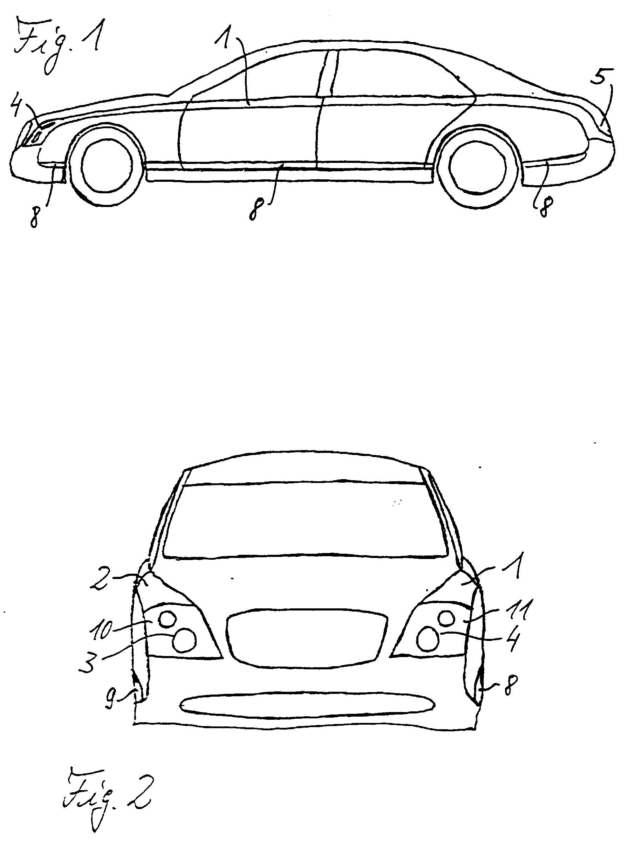

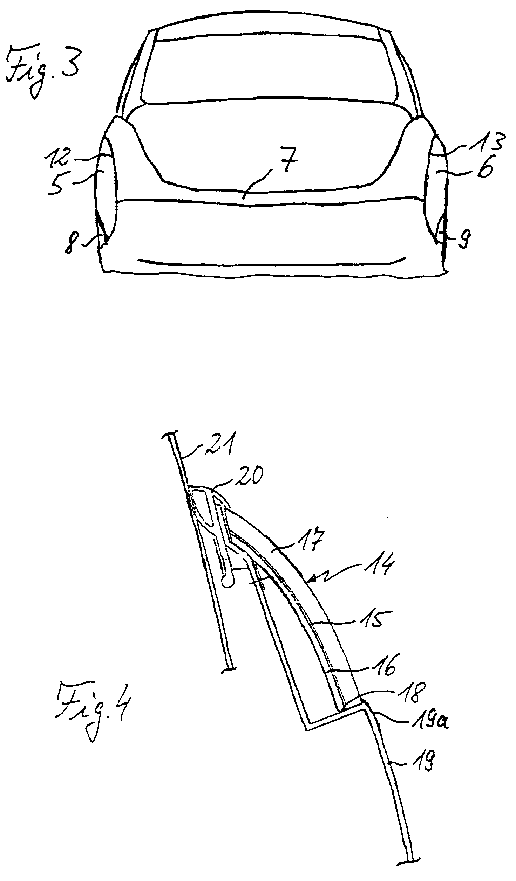

Der in den Fig. 1 bis 3 gezeigte Personenkraftwagen ist entlang seiner beiden Seitenbereiche karosserieaußenseitig mit je einem Elektrolumineszenz-Leuchtband 1, 2 versehen, die sich jeweils von einem zugehörigen Frontscheinwerfer 3, 4 durchgängig bis zu einer zugehörigen Heckleuchte 5, 6 erstrecken, wobei sie im wesentlichen horizontal auf Höhe der Oberkante einer Türbeplankung verlaufen. Die beiden seitlichen Leuchtbänder 1, 2 sind zusammen mit einem sie verbindenden, heckseitigen Leuchtbandabschnitt 7 als einteiliges Leuchtband mit passender Kontur gefertigt. Zwei weitere seitliche Elektrolumineszenz-Leuchtbänder 8, 9 verlaufen in analoger Weise symmetrisch auf Höhe der Unterkante der Türbeplankung ebenfalls vom Bereich des zugehörigen frontseitigen Scheinwerfers 3, 4 bis zum Bereich der zugehörigen Heckleuchte 5, 6, lediglch unterbrochen von den Radausschnitten.

Die gezeigten Elektrolumineszenz-Leuchtbänder 1, 2, 8, 9 bilden sowohl im eingeschalteten, leuchtenden, wie auch im ausgeschalteten Zustand Gestaltungselemente, die einen ausgewogenen Kontrast zu den lackierten Karosserieteilen bilden und dabei die Scheinwerfer 3, 4 mit den Heckleuchten 5, 6 zu einer optischen Gesamteinheit verbinden. Dazu trägt weitergehend bei, daß sich die oberen Leuchtbänder 1, 2 in den Bereich einer jeweiligen Streuscheibe 10, 11, 12, 13 der Scheinwerfer 3, 4 und der Heckleuchten 5, 6 hinein erstrecken und dort die von den jeweiligen Scheinwerfer- bzw. Heckleuchtenlampen nicht durchstrahlten Bereiche bedecken. Form und Gestaltung dieser Elektrolumineszenz-Leuchtbänder 1, 2, 7, 8, 9 unterstreichen besonders bei Dunkelheit die Kontur des Fahrzeugs. Die den Außenkonturen der Fahrzeugkarosserie folgenden Leuchtbänder 1, 2, 7, 8, 9 erleichtern anderen Verkehrsteilnehmern die Erkennung des Fahrzeugs besonders aus seitlichen Blickwinkeln, speziell auch bei sehr großen Fahrzeugen, und verbessern somit die passive Sicherheit.

Je nach Bedarf können in nicht näher gezeigter Weise weitere Elektrolumineszenz-Leuchtbänder vorgesehen sein, z.B. als zierleistenartige Elemente oder an Türgriffen, Deckel- und Klappenöffnern, als Firmenzeichen, Kennzeichenfelder sowie an Bereichen der Unterseite des Fahrzeugbodens zur Erzielung eines indirekten Effektes.

Die Leuchtbänder 1, 2, 7, 8, 9 werden von einer herkömmlichen und daher hier nicht weiter gezeigten Leuchtbandsteuerung angesteuert. Vorzugsweise erfolgt hierbei das Ein- und Ausschalten der Leuchtbänder 1, 2, 7, 8, 9 durch die Leuchtbandsteuerung selbsttätig in Abhängigkeit vom Zustand eines Fahrzeugaußenlichtes und/oder einer Zentralverriegelungsanlage und/oder einer Diebstahlwarnanlage und/oder eines bestimmten Fahrmanövers. So kann beispielsweise vorgesehen sein, die Leuchtbänder 1, 2, 7, 8, 9 synchron mit der normalen Fahrzeugaußenbeleuchtung ein- und auszuschalten. Des weiteren kann die Ansteuerung der Leuchtbänder 1, 2, 7, 8, 9 mit dem Zustand einer vorhandenen Zentralverriegelungsanlage in der Weise verknüpft sein, daß bei Sendung eines Entriegelungsimpulses von einem elektronischen Schlüssel die Leuchtbänder 1, 2, 7, 8, 9 automatisch eingeschaltet werden. Dies kann beispielsweise in Parkhäusern das Auffinden des Fahrzeugs erleichtern. Außerdem kann eine entsprechende Information über den Schließzustand des Fahrzeugs vermittelt werden. Durch Kopplung der Leuchtbandansteuerung an den Zustand einer Diebstahlwarnanlage können entsprechende optische Warnhinweise über einen Einbruch-/Diebstahlversuch abgegeben werden, z.B. wenn sich bei geschärfter Warnanlage eine Fahrzeugtür öffnet.

Die Ansteuerung der Elektrolumineszenz-Leuchtbänder 1, 2, 7, 8, 9 kann bei Bedarf so gestaltet sein, daß dadurch ein Lauflicht erzeugt wird. In diesem Fall sind die Leuchtbänder 1, 2, 7, 8, 9 aus kleineren, individuell ansteuerbaren Einzelsegmenten aufgebaut. Die Lauflichtfunktion ist besonders im Zusammenhang mit bestimmten Fahrmanövern nützlich, um die jeweils momentan beabsichtigte oder bereits eingeschlagene Fahrtrichtung des Fahrzeugs, d.h. nach vorne oder nach hinten, anzuzeigen. Dazu wird die Laufrichtung des beim Einparken, Ausparken oder ähnlichen Fahrmanövern aktivieren Lauflichts jeweils so gewählt, daß sie der momentan vorliegenden bzw. der anhand einer entsprechend eingelegten Gangstufe erkannten, beabsichtigten Fahrzeugbewegungsrichtung entspricht. Andere Verkehrsteilnehmer können dann anhand des aktivierten Lauflichts die Bewegung des Fahrzeugs leichter einschätzen.

Die Querschnittsansicht von Fig. 4 zeigt einen vorteilhaften Aufbau und eine günstige Anbringung eines Elektrolumineszenz-Leuchtbandes 14, das Teil eines der in den Fig. 1 bis 3 gezeigten Leuchtbänder 1, 2, 7, 8, 9 sein kann. Das Leuchtband 14 weist als aktives Element eine extrem flach bauende, vorgefertigte, herkömmliche Elektrolumineszenz-Flächenleuchte auf, die eine Lumineszenzfolie 15 beinhaltet, welche auf ein Leichtbau-Trägerteil 16 aus glasfaserverstärktem Kunststoff aufgebracht ist. In dem Trägerteil 16 sind auch eine Wechselspannungsversorgung, die von der zugehörigen Leuchtbandsteuerung gesteuert wird, sowie erforderliche Befestigungselemente integriert. Nach außen ist die Elektrolumineszenzfolie 15 von einem kratzfesten, innenseitig strukturierten, transparenten Deckglas 17 abgedeckt. Das Leuchtband 14 ist in einer zugehörigen Vertiefung 18 eines Karosserieaußenhautabschnitts 19, wie z.B. einer Türbeplankung, derart angeordnet, daß es außenseitig entland einer Längsseite im wesentlichen bündig zum angrenzenden Karosserieaußenhautbereich 19a verläuft. Die Karosserieaußenhaut behält auf diese Weise auch in dem Bereich, in welchem sich das Leuchtband 14 befindet, eine glatt verlaufende Oberflächentopologie ohne merklichen Absatz beim Übergang zwischen Leuchtbandbereich und angrenzendem Karosserieaußenhautbereich. Entlang ihrer gegenüberliegenden Längsseite ist das Elektrolumineszenz-Leuchtband 14 in einem Gummiprofil 20 aufgenommen, das gegen einen Fahrzeugscheibenbereich 21 anliegt.

Das Leuchtband 14 ist farblich auf die Fahrzeuglackierung abgestimmt. Durch Verwendung des Deckglases 17 als Farbfilter können bei eingeschaltetem bzw. ausgeschaltetem Leuchtband 14 unterschiedliche Farbtöne bereitgestellt werden.

Alternativ zu dem in Fig. 4 gezeigten Leuchtbandaufbau kann die Elektrolumineszenz-Schicht statt auf einer Trägerschicht direkt auf dem Deckglas oder einer entsprechenden lichtdurchlässigen Deckschicht aufgebracht sein. Vorzugsweise ist die Elektrolumineszenz-Schicht dafür ausgelegt, durch Veränderung der angelegten Spannung gedimmt und/oder durch Veränderung der Wechselspannungsfrequenz im Farbton verändert werden zu können. Durch Unterteilung der Elektrolumineszenz-Schicht in beliebig geformte, einzeln ansteuerbare Zonen können gezielt einzelne Leuchtbandbereiche beliebiger Form separat aktiviert und deaktiviert werden. Als weitere Alternative kann das Elektrolumineszenz-Leuchtband mehrschichtig aufgebaut sein, wobei die einzelnen Leuchtschichten und zugehörigen Elektroden transparent oder wenigstens teiltransparent sind. Mit einem solchen mehrschichtigen Leuchtband lassen sich in steuerbarer Weise Farbänderungen und Farbmischungen realisieren.

Neben der beschriebenen Anbringung von Leuchtbändern an der Karosserieaußenhaut können Elektrolumineszenz-Leuchtbänder auch im Fahrzeuginneren Verwendung finden, beispielsweise zur flächigen Dachausleuchtung mit verschiedenen Feldern als Kassettendach oder in Form beliebig geformter, mit einem Dachverkleidungsbezug verschweißter Elemente, oder als indirekte Beleuchtungen, die teilweise verdeckt hinter Säulen- oder Rahmenverkleidungen, im Fußraum unter einer Instrumententafel oder an Türverkleidungen und Einstiegsleisten angeordnet sind, als Elemente zur Auflicht-Beleuchtung von Bedienelementen, wie Schaltern an einer Mittelkonsole, einer Instrumententafel oder an Türverkleidungen, sowie als Elemente zur Hinterleuchtung von Blenden von Bedienelementen zur Erzielung eines speziellen Tag-/Nachteindrucks, wobei gegebenenfalls Anzeigefunktionen in einem solchen Leuchtband integriert sein können, beispielsweise durch getrennte, separat ansteuerbare Felder und/oder Farben.

## Patentansprüche

1. Fahrzeug mit
- wenigstens einem an der Außenhaut der Fahrzeugkarosserie angeordneten Elektrolumineszenz-Leuchtband (1),
**dadurch gekennzeichnet, daß**
- sich das Elektrolumineszenz-Leuchtband (1) durchgängig von einem frontseitigen Scheinwerfer (4) bis zu einer Heckleuchte (5) und zusätzlich innerhalb eines nicht durchstrahlten Bereiches einer Streuscheibe (11) des Scheinwerfers (4) und/oder der Heckleuchte (5) erstreckt.

2. Fahrzeug, insbesondere nach Anspruch 1, mit
- wenigstens einem an der Außenhaut der Fahrzeugkarosserie (19) angeordneten Elektrolumineszenz-Leuchtband (14),
**dadurch gekennzeichnet, daß**
- das Elektrolumineszenz-Leuchtband (1) in Abhängigkeit vom Zustand eines Fahrzeugaußenlichtes und/oder einer Zentralverriegelungsanlage und/oder einer Diebstahlwarnanlage seinen Einschalt- oder Ausschalt-Zustand einnimmt.

3. Fahrzeug, insbesondere nach Anspruch 1 oder 2, mit
- wenigstens einem an der Außenhaut der Fahrzeugkarosserie angeordneter Elektrolumineszenz-Leuchtband (1),
**dadurch gekennzeichnet, daß**
- das Elektrolumineszenz-Leuchtband (1) in Abhängigkeit davon, ob sich das Fahrzeug vorwärts oder rückwärts bewegt beziehungsweise eine Gangstufe für Vorwärts- oder für Rückwärtsfahrt eingelegt ist, als Lauflicht dergestalt betrieben wird, daß die Laufrichtung des Lauflichts der tatsächlichen beziehungsweise anhand der eingelegten Gangstufe erkannten, beabsichtigten Vorwärts- oder Rückwärtsbewegung des Fahrzeugs entspricht.

4. Fahrzeug nach einem der Ansprüche 1 bis 3, weiter
**dadurch gekennzeichnet, daß**
das Elektrolumineszenz-Leuchtband (14) in einer zugehörigen Vertiefung (18) der Karosserieaußenhaut (19) derart angeordnet ist, daß es außenseitig im wesentlichen bündig zum angrenzenden Karosserieaußenhautbereich (19a) verläuft.
